# EUROPEAN PATENT APPLICATION

(11) **EP 4 807 405 A1**
(43) Date of publication of application: **16.09.2026**
(21) Application number: 24887692.2
(22) Date of filing: 10.10.2024
(51) Int. Cl.: G01V 5/226, G01V 5/22

(54) **CT SCANNING IMAGING SYSTEM AND METHOD BASED ON SINGLE LINEAR SCANNING CHANNEL**

(30) Priority: 09.11.2023 CN 202311490089
(71) Applicant: Tsinghua University, Haidian District, Beijing 100084 (CN); NUCTECH COMPANY LIMITED, Beijing 100084 (CN)
(72) Inventor: ZHANG, Li, Beijing 100084 (CN); CHEN, Zhiqiang, Beijing 100084 (CN); LIANG, Jinning, Beijing 100084 (CN); SHEN, Le, Beijing 100084 (CN); ZHAO, Tiao, Beijing 100084 (CN); HUANG, Qingping, Beijing 100084 (CN); SUN, Yunda, Beijing 100084 (CN); LIU, Junhao, Beijing 100084 (CN)
(74) Representative: Winter, Brandl - Partnerschaft mbB
(86) International application number: PCT/CN2024/123913
(87) International publication number: WO 2025/098079

(57) **Abstract**

The present disclosure provides a CT scanning imaging system based on a single linear scanning channel, including: a conveying device configured to move a scanned object in a single linear scanning channel in a predetermined conveying direction; a plurality of scanning segments arranged at intervals in the conveying direction, where each scanning segment includes a plurality of ray sources and at least one detector, in each scanning segment, the plurality of ray sources are sequentially arranged at intervals on one side of the scanning channel and configured to alternately emit ray beams to form a scanning region, and the at least one detector is located on the other side of the scanning channel and configured to detect projection data formed by the ray beams transmitted through the scanned object in a process of the scanned object passing through the scanning region; and an imaging device configured to generate a three-dimensional reconstructed image of the scanned object according to the projection data detected by each detector in the plurality of scanning segments.

## Description

This application claims the benefit of priority to Chinese Patent Application No. 202311490089.X filed on November 9, 2023, which is incorporated herein by reference in its entirety.

### TECHNICAL FIELD

The present disclosure relates to a field of radiation imaging, and in particular, to a CT scanning imaging system and method based on a single linear scanning channel.

### BACKGROUND

At present, existing linear CT scanning systems may be divided into two types. In a first type, an object to be inspected passes through a single linear channel for scanning to obtain a DR image, and then an independent two-dimensional CT scan is performed at a cross-section of interest in a channel direction to obtain internal detailed information of the cross-section. In a second type, an object to be inspected undergoes multi-segment linear channel scanning, where the object forms a different angle with respect to the channel direction in each segment. This may be achieved either by rotating the object while keeping the channel fixed, or by keeping the object fixed while changing the channel direction.

However, based on current application situations, the above two technologies have at least the following related problems.

The first type of linear CT scanning system is a superposition of a linear DR scanning system and a two-dimensional tomographic CT scanning system, with these two systems operating independently. A DR scan is performed first, and several cross-sections of interest are then selected according to the DR image to undergo two-dimensional tomographic CT scans respectively. These two scanning processes are completely uncoupled, leading to a complex overall process and low throughput. Moreover, the two-dimensional tomographic CT scanning adopts a traditional source-detector rotational scanning method, which requires a rotary gantry to carry source(s) and detector(s), resulting in a complex structure. In a case of imaging large cargo or vehicles, accelerator-based ray sources are required, which places higher requirements on strength of the mechanical structure and further increases hardware costs. Furthermore, the DR image and the two-dimensional CT images of several cross-sections contain limited information, increasing the likelihood of false positives or missed detections.

For the second type of linear CT scanning system, the sources and detectors remain fixed during the scanning process. Each segment of linear channel scanning has the same ray path but collects projection of the object at a different angle. If the multi-segment linear scanning is implemented by reusing a single linear channel, a rotary mechanism needs to be added at an end of a channel track to rotate the object to be inspected between segments, which increases non-scanning time and reduces throughput. In a case of scanning large cargo or vehicles, higher requirements are placed on the precision, strength, and installation space of the rotary mechanism, further increasing hardware costs. If the scanning is implemented by conveying the object through a plurality of linear channels oriented at different angles without rotating the object, each segment of scanning requires a set of independent linear channel and source-detector, causing the cost to increase with the number of segments. Moreover, due to different channel directions of the plurality of segments, the constraint on the system installation space changes from one dimension of a single channel to two dimensions. Additionally, the object to be inspected needs to be transferred between adjacent linear channels, which increases the structural complexity.

The above information disclosed in this section is merely intended to provide background understanding of the inventive concepts of the present disclosure, and therefore may contain information that does not constitute related art.

### SUMMARY

The present disclosure provides a CT scanning imaging system and method based on a single linear scanning channel.

According to a first aspect of the present disclosure, a CT scanning imaging system based on a single linear scanning channel is provided, including: a conveying device configured to move a scanned object in the single linear scanning channel in a predetermined conveying direction, where the conveying device includes a conveying surface for placing the scanned object; p scanning segments arranged at intervals in the conveying direction, where p is a positive integer greater than or equal to 2, where each scanning segment includes a plurality of ray sources and at least one detector, in each scanning segment, the plurality of ray sources are sequentially arranged at intervals on one side of the scanning channel and configured to alternately emit ray beams to form a scanning region, and the at least one detector is located on the other side of the scanning channel and configured to detect projection data formed by the ray beams transmitted through the scanned object in a process of the scanned object passing through the scanning region; and an imaging device configured to generate a three-dimensional reconstructed image of the scanned object according to the projection data detected by each detector in the p scanning segments.

According to an embodiment of the present disclosure, the p scanning segments include an i^{th} scanning segment and a j^{th} scanning segment, i and j are positive integers greater than or equal to 1 and less than or equal to p, and i is not equal to j; the i^{th} scanning segment includes mi ray sources and ni detectors, mi is a positive integer greater than or equal to 2, and ni is a positive integer greater than or equal to 1; the j^{th} scanning segment includes mj ray sources and nj detectors, mj is a positive integer greater than or equal to 2, and nj is a positive integer greater than or equal to 1; and when viewed along the scanning channel, the mi ray sources and the ni detectors are arranged on both sides of the scanning channel in a first layout direction, and the mj ray sources and the nj detectors are arranged on both sides of the scanning channel in a second layout direction.

According to an embodiment of the present disclosure, the first layout direction is different from the second layout direction.

According to an embodiment of the present disclosure, an orthographic projection of the first layout direction on a plane perpendicular to the conveying direction intersects with an orthographic projection of the second layout direction on the plane perpendicular to the conveying direction.

According to an embodiment of the present disclosure, the orthographic projection of the first layout direction on the plane perpendicular to the conveying direction is perpendicular to the orthographic projection of the second layout direction on the plane perpendicular to the conveying direction.

According to an embodiment of the present disclosure, the first layout direction is parallel to a width direction of the scanning channel and parallel to the conveying surface.

According to an embodiment of the present disclosure, the second layout direction is parallel to a height direction of the scanned object and perpendicular to the conveying surface.

According to an embodiment of the present disclosure, the first layout direction forms a first inclination angle with respect to the conveying surface, and the first inclination angle is greater than 0° and less than 90°; and/or the second layout direction forms a second inclination angle with respect to the conveying surface, and the second inclination angle is greater than 0° and less than 90°.

According to an embodiment of the present disclosure, an orthographic projection of the first layout direction on a plane perpendicular to the conveying direction coincides with an orthographic projection of the second layout direction on the plane perpendicular to the conveying direction.

According to an embodiment of the present disclosure, a first relative position of the mi ray sources with respect to the ni detectors in the conveying direction is different from a second relative position of the mj ray sources with respect to the nj detectors in the conveying direction.

According to an embodiment of the present disclosure, the ni detectors include a first column of detector modules arranged foremost in the conveying direction, and the nj detectors include a first column of detector modules arranged foremost in the conveying direction; and when viewed in a direction perpendicular to the conveying surface, the mi ray sources are offset from the first column of detector modules of the ni detectors by a first offset distance in the conveying direction, the mj ray sources are offset from the first column of detector modules of the nj detectors by a second offset distance in the conveying direction, and the first offset distance is not equal to the second offset distance.

According to an embodiment of the present disclosure, ni=1, and the ni detector is an area array detector; and/or nj=1, and the nj detector is an area array detector.

According to an embodiment of the present disclosure, ni is greater than or equal to 2, and the ni detectors are linear detector arrays; and/or nj is greater than or equal to 2, and the nj detectors are linear detector arrays.

According to an embodiment of the present disclosure, the ni detectors are arranged at intervals in the conveying direction, and/or the nj detectors are arranged at intervals in the conveying direction.

According to an embodiment of the present disclosure, the ni detectors are arranged at equal intervals in the conveying direction, or the ni detectors are arranged at equal angular intervals in the conveying direction; and/or the nj detectors are arranged at equal intervals in the conveying direction, or the nj detectors are arranged at equal angular intervals in the conveying direction.

According to an embodiment of the present disclosure, a detection surface of the ni detectors forms a first surface angle with respect to the conveying surface, a detection surface of the nj detectors forms a second surface angle with respect to the conveying surface, and the first surface angle is not equal to the second surface angle.

According to an embodiment of the present disclosure, the first surface angle is about 90°, and the second surface angle is about 0°.

According to an embodiment of the present disclosure, a detection surface of the ni detectors forms a first surface angle with respect to the conveying surface, a detection surface of the nj detectors forms a second surface angle with respect to the conveying surface, and the first surface angle is equal to the second surface angle.

According to an embodiment of the present disclosure, the mi ray sources are sequentially arranged at intervals along a first straight line, and the first straight line is an imaginary straight line extending in a first direction perpendicular to the conveying surface; and/or the mj ray sources are sequentially arranged at intervals along a second straight line, and the second straight line is an imaginary straight line extending in a second direction perpendicular to the first direction and the conveying direction.

According to an embodiment of the present disclosure, the mi ray sources have the same beam emission direction, and/or the mj ray sources have the same beam emission direction; or at least two of the mi ray sources have different beam emission directions, and/or at least two of the mj ray sources have different beam emission directions.

According to an embodiment of the present disclosure, at least one of the mi ray sources is configured to emit a cone beam including a first fan-angle direction primary beam plane and a first cone-angle direction primary beam plane; and at least one of the mj ray sources is configured to emit a cone beam including a second fan-angle direction primary beam plane and a second cone-angle direction primary beam plane.

According to an embodiment of the present disclosure, the first fan-angle direction primary beam plane is parallel to the second fan-angle direction primary beam plane; and/or the first cone-angle direction primary beam plane is not parallel to the second cone-angle direction primary beam plane.

According to an embodiment of the present disclosure, the first fan-angle direction primary beam plane is not parallel to the second fan-angle direction primary beam plane; and/or the first cone-angle direction primary beam plane is parallel to the second cone-angle direction primary beam plane.

According to an embodiment of the present disclosure, the first fan-angle direction primary beam plane is perpendicular to the conveying surface and perpendicular to the conveying direction; or the first fan-angle direction primary beam plane is perpendicular to the conveying surface and forms a first angle greater than 90° and less than 180° with respect to the conveying direction; or the first fan-angle direction primary beam plane forms a first included angle not equal to 90° with respect to the conveying surface and is perpendicular to the conveying direction; or the first fan-angle direction primary beam plane forms a first included angle not equal to 90° with respect to the conveying surface and forms a first angle greater than 90° and less than 180° with respect to the conveying direction; and/or the second fan-angle direction primary beam plane is perpendicular to the conveying surface and perpendicular to the conveying direction; or the second fan-angle direction primary beam plane is perpendicular to the conveying surface and forms a second angle greater than 0° and less than 90° with respect to the conveying direction; or the second fan-angle direction primary beam plane forms a second included angle not equal to 90° with respect to the conveying surface and is perpendicular to the conveying direction; or the second fan-angle direction primary beam plane forms a second included angle not equal to 90° with respect to the conveying surface and forms a second angle greater than 0° and less than 90° with respect to the conveying direction.

According to an embodiment of the present disclosure, the first cone-angle direction primary beam plane is parallel to the conveying surface, or the first cone-angle direction primary beam plane is perpendicular to the conveying surface, or the first cone-angle direction primary beam plane forms a third included angle greater than 0° and less than 90° with respect to the conveying surface; and/or the second cone-angle direction primary beam plane is parallel to the conveying surface, or the second cone-angle direction primary beam plane is perpendicular to the conveying surface, or the second cone-angle direction primary beam plane forms a fourth included angle greater than 0° and less than 90° with respect to the conveying surface.

According to an embodiment of the present disclosure, the first fan-angle direction primary beam plane includes a first cone angle, and the first cone angle corresponds to a size of at least one of the ni detectors in a first arrangement direction perpendicular to the first layout direction; and/or the second fan-angle direction primary beam plane includes a second cone angle, and the second cone angle corresponds to a size of at least one of the nj detectors in a first arrangement direction perpendicular to the second layout direction; and/or the first cone-angle direction primary beam plane includes a first fan angle, and the first fan angle corresponds to a size of the ni detectors in a second arrangement direction parallel to the conveying direction; and/or the second cone-angle direction primary beam plane includes a second fan angle, and the second fan angle corresponds to a size of the nj detectors in a second arrangement direction parallel to the conveying direction.

According to an embodiment of the present disclosure, the scanned object includes at least one of a container, a car, or a truck, and each of the plurality of ray sources includes a MeV-level accelerator; or the scanned object includes at least one of a suitcase or a parcel, and each of the plurality of ray sources includes a KeV-level X-ray machine.

According to a second aspect of the present disclosure, a CT scanning imaging method based on a single linear scanning channel is provided, including: driving a scanned object to move in a scanning channel in a predetermined conveying direction using a conveying device, where the conveying device includes a conveying surface for placing the scanned object; controlling the scanned object to sequentially pass through p scanning regions formed by p scanning segments, where mi ray sources in an i^{th} scanning segment among the p scanning segments are controlled to alternately emit ray beams to form a scanning region before the scanned object enters a scanning range of the i^{th} scanning segment such that the scanned object passes through the scanning region of the i^{th} scanning segment, and ni detectors in the i^{th} scanning segment are controlled to detect projection data formed by the ray beams transmitted through the scanned object in a process of the scanned object passing through the scanning region of the i^{th} scanning segment, where i and j are positive integers greater than or equal to 1 and less than or equal to p, mi is a positive integer greater than or equal to 2, and ni is a positive integer greater than or equal to 1; and generating a computed tomography image of the scanned object according to a plurality of projection data formed by the detectors in the p scanning segments.

### BRIEF DESCRIPTION OF THE DRAWINGS

For better understanding of the present disclosure, a detailed description of the present disclosure will be provided with reference to the accompanying drawings.
FIG. 1 schematically shows a schematic structural diagram of a scanning imaging system provided by an embodiment of the present disclosure;
FIG. 2 schematically shows a side view of the scanning imaging system when viewed in a conveying direction provided by an embodiment of the present disclosure.
FIG. 3 schematically shows a top view of the scanning imaging system provided by an embodiment of the present disclosure.
FIG. 4 schematically shows a schematic diagram of a beam emission direction of a ray source in the scanning imaging system provided by an embodiment of the present disclosure.
FIG. 5 schematically shows a side view of the scanning imaging system with different source-detector layout directions when viewed in the conveying direction provided by an embodiment of the present disclosure.
FIG. 6 schematically shows a schematic structural diagram of another scanning imaging system provided by an embodiment of the present disclosure.
FIG. 7 schematically shows a side view of another scanning imaging system when viewed in the conveying direction provided by an embodiment of the present disclosure.
FIG. 8 schematically shows a top view of another scanning imaging system provided by an embodiment of the present disclosure.
FIG. 9 schematically shows a structural block diagram of a scanning imaging system provided by an embodiment of the present disclosure.
FIG. 10 schematically shows a schematic diagram of a trigger pulse sequence provided by an embodiment of the present disclosure.
FIG. 11 schematically shows a schematic diagram of another trigger pulse sequence provided by an embodiment of the present disclosure.
FIG. 12 schematically shows a schematic diagram of yet another trigger pulse sequence provided by an embodiment of the present disclosure.
FIG. 13 schematically shows a schematic flowchart of a scanning imaging method provided by an embodiment of the present disclosure.
FIG. 14 schematically shows a schematic diagram of an operation in an image reconstruction method provided by an embodiment of the present disclosure.
FIG. 15 schematically shows a block diagram of an imaging device of the scanning imaging system provided by an embodiment of the present disclosure.

### DETAILED DESCRIPTION OF EMBODIMENTS

Specific embodiments of the present disclosure will be described in detail below. It should be noted that embodiments described here are only for illustration and are not intended to limit the present disclosure. In the following description, numerous specific details are set forth in order to provide a thorough understanding of the present disclosure. However, it is clear to those of ordinary skill in the art that the present disclosure may be practiced without these specific details. In other instances, well-known structures, materials or methods are not described in detail to avoid confusing the present disclosure.

Throughout the specification, references to "an embodiment", "embodiments", "an example" or "examples" mean that a specific feature, structure, or characteristic described in connection with the embodiment or example is included in at least one embodiment of the present disclosure. Thus, the phrases "in an embodiment," "in embodiments," "an example," or "examples" that appear in various places throughout the specification do not necessarily refer to the same embodiment or example. Furthermore, specific features, structures, or characteristics may be combined in any suitable combination and/or sub-combination in one or more embodiments or examples. In addition, those of ordinary skill in the art should understand that the term "and/or" used herein includes any and all combinations of one or more of the associated listed items.

The terms used herein are only for describing specific embodiments and are not intended to limit the present disclosure. Terms such as "including" and "comprising" used herein indicate the presence of a feature, step, operation, and/or component, but do not exclude the presence or addition of one or more other features, steps, operations, or components.

All terms (including technical and scientific terms) used herein have the meanings commonly understood by those skilled in the art unless otherwise defined. It should be noted that the terms used herein should be interpreted as having a meaning consistent with the context of the specification and should not be interpreted in an idealized or overly rigid manner.

Computed tomography (also referred to as CT) imaging refers to a process of performing a tomographic scan on an object under inspection using rays, converting analog signals received by detectors into digital signals, calculating an attenuation coefficient of each pixel by an electronic computer, and then reconstructing an image to display a tomographic structure of each part of the object under inspection.

It should be noted that the scanning imaging system and method provided by embodiments of the present disclosure are suitable for security inspection of objects in public places, and capable of obtaining a distribution map of attenuation coefficients inside an object and automatically identifying dangerous goods.

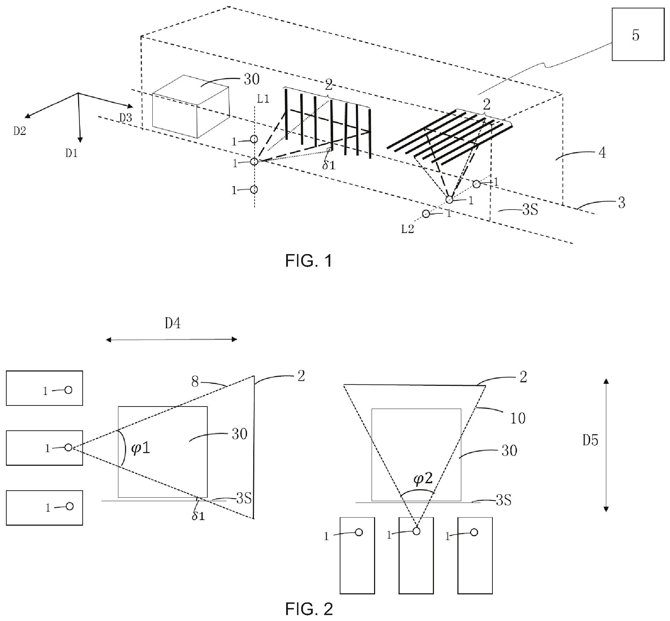

FIG. 1 shows a schematic structural diagram of a scanning imaging system provided by an embodiment of the present disclosure. As shown in FIG. 1, the scanning imaging system includes a conveying device 3, p scanning segments, a scanning channel 4, and an imaging device 5.

In an embodiment of the present disclosure, p is a positive integer greater than or equal to 2, that is, the scanning imaging system includes at least two scanning segments. In the embodiment shown in FIG. 1, two scanning segments are exemplarily illustrated. For example, the p scanning segments may include an i^{th} scanning segment and a j^{th} scanning segment, where i and j are both positive integers greater than or equal to 1 and less than or equal to p, and i is not equal to j. The two scanning segments exemplarily illustrated in FIG. 1 may include the i^{th} scanning segment and the j^{th} scanning segment.

For example, the i^{th} scanning segment may include mi ray sources and ni detectors, where mi is a positive integer greater than or equal to 2, and ni is a positive integer greater than or equal to 1. The j^{th} scanning segment may include mj ray sources and nj detectors, where mj is a positive integer greater than or equal to 2, and nj is a positive integer greater than or equal to 1. When viewed along the scanning channel, the mi ray sources and the ni detectors are arranged on both sides of the scanning channel in a first layout direction D4, and the mj ray sources and the nj detectors are arranged on both sides of the scanning channel in a second layout direction D5.

For ease of description, the following will use the example of i=1 and j=2, that is, a first scanning segment and a second scanning segment. It should be understood that this example is provided to illustrate embodiments of the present disclosure and does not constitute a limitation to embodiments of the present disclosure.

As shown in FIG. 1, the two scanning segments are spaced apart in a conveying direction D3 (as indicated by the arrow in FIG. 1). The first scanning segment includes m1 ray sources 1 and n1 detectors 2, and the second scanning segment includes m2 ray sources 1 and n2 detectors 2. By way of example, m1 is a positive integer greater than or equal to 2, and n1 is a positive integer greater than or equal to 1; m2 is a positive integer greater than or equal to 2, and n2 is a positive integer greater than or equal to 1.

Specifically, the conveying device 3 is used to move a scanned object 30 in the scanning channel 4 in the predetermined conveying direction D3. The conveying device 3 includes a conveying surface 3S for placing the scanned object 30. By way of example, the conveying device 3 may be implemented in the form of belt transmission, chain transmission, gear transmission, or other types of transmission, which is not limited herein. For example, the scanned object 30 may be placed on the conveying surface 3S of the conveying device 3.

In the embodiment of FIG. 1, the scanning channel 4 is a single linear scanning channel, which means that a movement trajectory of the scanned object 30 in the scanning region in the predetermined conveying direction D3 is a linear trajectory.

Continuing to refer to FIG. 1, in the first scanning segment, the m1 ray sources 1 and the n1 detectors 2 are arranged on both sides of the scanning channel 4 in a first layout direction D4. The first layout direction D4 is parallel to a width direction of the scanning channel 4 and parallel to the conveying surface 3S. The m1 ray sources 1 are used to alternately emit ray beams to form a scanning region. The m1 ray sources 1 are located on a side of the scanning channel 4 and sequentially arranged at intervals along a first straight line L1. The first straight line L1 is an imaginary straight line extending in a first direction D1 perpendicular to the conveying surface 3S. That is, a plurality of ray sources 1 are distributed at different heights along a vertical line and alternately emit ray beams to form a scanning region.

Referring to FIG. 1 and FIG. 2, in the second scanning segment, the m2 ray sources 1 and the n2 detectors 2 are arranged on upper and lower sides of the scanning channel 4 in a second layout direction D5. The second layout direction D5 is parallel to a height direction of the scanned object 30 and perpendicular to the conveying surface 3S. The m2 ray sources 1 are used to alternately emit ray beams to form a scanning region. The m2 ray sources 1 are located on the lower side of the scanning channel 4 and sequentially arranged at intervals along a second straight line L2. The second straight line L2 is an imaginary straight line extending in a second direction D2 perpendicular to both the first direction D1 and the conveying direction D3. The plurality of ray sources 1 alternately emit ray beams to form a scanning region.

It should be noted that the first layout direction D4 is different from the second layout direction D5. An orthographic projection of the first layout direction D4 on a plane perpendicular to the conveying direction D3 intersects with an orthographic projection of the second layout direction D5 on the plane perpendicular to the conveying direction D3. For example, the orthographic projection of the first layout direction D4 on the plane perpendicular to the conveying direction D3 is perpendicular to the orthographic projection of the second layout direction D5 on the plane perpendicular to the conveying direction D3.

By way of example, the scanned object 30 includes at least one of a container, a car, or a truck, or the scanned object 30 includes at least one of a suitcase or a parcel.

In an example, the ray source 1 may be an accelerator, such as a MeV-level accelerator with adjustable energy and strong penetration capabilities. It should be noted that embodiments of the present disclosure do not impose any particular limitation on the type of the ray source 1. In other embodiments, the ray source 1 may be another type of ray source, such as a KeV-level X-ray machine.

Continuing to refer to FIG. 1, in the first scanning segment, the n1 detectors 2 are used to detect projection data formed by the ray beams transmitted through the scanned object 30 in a process of the scanned object 30 passing through the scanning region. The n1 detectors 2 are located on the other side of the scanning channel 4 and sequentially arranged at intervals in the conveying direction D3.

Continuing to refer to FIG. 1, in the second scanning segment, the n2 detectors 2 are used to detect projection data formed by the ray beams transmitted through the scanned object 30 in a process of the scanned object 30 passing through the scanning region. The n2 detectors 2 are located on the upper side of the scanning channel 4 and sequentially arranged at intervals in the conveying direction D3.

It should be noted that in embodiments of the present disclosure, the n1 detectors 2 and the n2 detectors 2 are linear detector arrays. By way of example, the n1 detectors 2 and the n2 detectors 2 may be multi-row detectors or area-array detectors.

Continuing to refer to FIG. 1, the n1 detectors 21 are arranged at equal intervals in the conveying direction D3, and the n2 detectors 2 are arranged at equal intervals in the conveying direction D3.

In an embodiment of the present disclosure, a detection surface of the n1 detectors 21 forms a first surface angle δ1 with respect to the conveying surface 3S, and a detection surface of the n2 detectors 2 forms a second surface angle with respect to the conveying surface 3S. The first surface angle is not equal to the second surface angle. As shown in FIG. 1, the first surface angle δ1 is about 90°, and the second surface angle is about 0°.

The imaging device 5 is used to generate a computed tomography image (i.e., CT image) of the scanned object 30 according to the projection data detected by the detectors 2 in the two scanning segments.

In the scanning imaging system according to embodiments of the present disclosure, when inspecting the scanned object 30, the conveying device 3 may move the scanned object 30 in the scanning channel 4 in the predetermined conveying direction D3 to pass through a plurality of scanning segments. In each scanning segment, a plurality of ray sources 1 alternately emit ray beams to form a scanning region, and then a plurality of detectors 2 detect the projection data formed by the ray beams emitted by the plurality of ray sources 1 and transmitted through the scanned object in a process of the scanned object passing through the scanning segment. The imaging device 5 then generates a computed tomography image of the scanned object 30 according to the plurality of projection data formed by the detectors 2 in the plurality of scanning segments. In other words, in the scanning imaging system according to embodiments of the present disclosure, the reconstruction of the three-dimensional image is completed through a single scan, i.e., the object to be inspected passes through the linear channel once to complete the scan. The ray source and the detector do not rotate or move in the scanning process, resulting in a low complexity of the transmission device and a high throughput.

It should be noted that in embodiments of the present disclosure, the conveying device 3 drives the scanned object 30 to move in the predetermined conveying direction D3 along a single linear track without transition between multiple linear tracks. The system installation space is constrained in one dimension, and site requirements are not high.

It should be noted that in embodiments of the present disclosure, the positions of the plurality of ray sources 1 and the plurality of detectors 2 in each scanning segment remain fixed, with no rotation or movement in the scanning process. Therefore, there is no need for a rotary gantry or a movable track.

It should also be noted that in embodiments of the present disclosure, the layout directions of the plurality of ray sources 1 and the plurality of detectors 2 may be different in different scanning segments. Scanning is performed by rapidly switching the beam emission, thereby achieving arbitrary projection angles and improving data completeness without affecting a scanning speed.

It should also be noted that in embodiments of the present disclosure, as the number of scanning segments increases, the number of source-detector sets increases linearly, thereby improving the completeness of projection data and enhancing the quality of the reconstructed images.

In some exemplary embodiments, at least one of the mi ray sources is used to emit a cone beam. For example, referring to FIG. 1, for each source-detector set, a central cross-section of the cone beam emitted by a central ray source is indicated, where the thin dashed line represents a fan-angle direction primary beam plane, and an in-plane angle is a cone angle; the thick dashed line represents a cone-angle direction primary beam plane, and an in-plane angle is a fan angle.

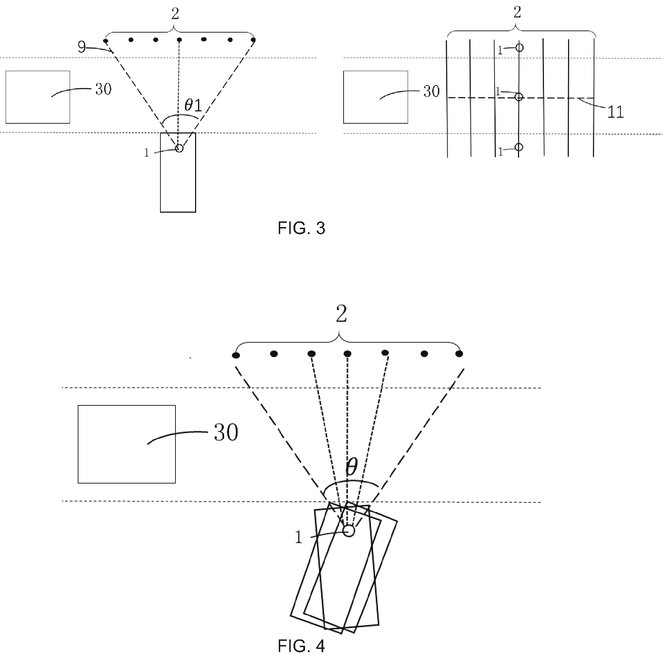

FIG. 2 schematically shows a side view of the scanning imaging system when viewed in the conveying direction provided by an embodiment of the present disclosure. FIG. 3 schematically shows a top view of the scanning imaging system provided by an embodiment of the present disclosure.

For example, referring to FIG. 2 and FIG. 3, in the first scanning segment, at least one of the m1 ray sources 1 emits a ray beam that includes a first fan-angle direction primary beam plane 8 (indicated by a dotted line) and a first cone-angle direction primary beam plane 9 (indicated by a dashed line); in the second scanning segment, at least one of the m2 ray sources 1 emits a ray beam that includes a second fan-angle direction primary beam plane 10 (indicated by a dotted line) and a second cone-angle direction primary beam plane 11 (indicated by a dashed line).

Continuing to refer to FIG. 2, the first fan-angle direction primary beam plane 8 is parallel to the second fan-angle direction primary beam plane 10.

Continuing to refer to FIG. 3, the first cone-angle direction primary beam plane 9 is not parallel to the second cone-angle direction primary beam plane 11.

Continuing to refer to FIG. 2 and FIG. 3, the first fan-angle direction primary beam plane 8 is perpendicular to the conveying surface 3S and perpendicular to the conveying direction D3. Alternatively, the first fan-angle direction primary beam plane 8 is perpendicular to the conveying surface 3S and forms a first angle greater than 90° and less than 180° with respect to the conveying direction D3.

In some exemplary embodiments, the first fan-angle direction primary beam plane 8 forms a first included angle not equal to 90° with respect to the conveying surface 3S and is perpendicular to the conveying direction D3. Alternatively, the first fan-angle direction primary beam plane 8 forms a first included angle not equal to 90° with respect to the conveying surface 3S and forms a first angle greater than 90° and less than 180° with respect to the conveying direction D3.

Continuing to refer to FIG. 2 and FIG. 3, the second fan-angle direction primary beam plane 10 is perpendicular to the conveying surface 3S and perpendicular to the conveying direction D3. Alternatively, the second fan-angle direction primary beam plane 10 is perpendicular to the conveying surface 3S and forms a second angle greater than 0° and less than 90° with respect to the conveying direction D3.

In some exemplary embodiments, the second fan-angle direction primary beam plane 10 forms a second included angle not equal to 90° with respect to the conveying surface 3S and is perpendicular to the conveying direction D3. Alternatively, the second fan-angle direction primary beam plane 10 forms a second included angle not equal to 90° with respect to the conveying surface 3S and forms a second angle greater than 0° and less than 90° with respect to the conveying direction D3.

Continuing to refer to FIG. 3, the first cone-angle direction primary beam plane 9 is parallel to the conveying surface 3S, and the second cone-angle direction primary beam plane 11 is perpendicular to the conveying surface 3S. For another example, the first cone-angle direction primary beam plane 9 may form a third included angle greater than 0° and less than 90° with respect to the conveying surface 3S, or the second cone-angle direction primary beam plane 11 may form a fourth included angle greater than 0° and less than 90° with respect to the conveying surface 3S.

Continuing to refer to FIG. 2, the first fan-angle direction primary beam plane 8 includes a first cone angle φ1, and the first cone angle corresponds to a size of at least one of the n1 detectors 2 in a first arrangement direction perpendicular to the first layout direction D4. The second fan-angle direction primary beam plane 10 includes a second cone angle φ2, and the second cone angle corresponds to a size of at least one of the n2 detectors 2 in a first arrangement direction perpendicular to the second layout direction D5.

Continuing to refer to FIG. 3, the first cone-angle direction primary beam plane 9 includes a first fan angle θ1, and the first fan angle θ1 corresponds to a size of the n1 detectors 2 in a second arrangement direction parallel to the conveying direction D3. The second cone-angle direction primary beam plane 11 includes a second fan angle θ2, and the second fan angle θ2 corresponds to a size of the n2 detectors 2 in a second arrangement direction parallel to the conveying direction D3.

Through embodiments of the present disclosure, the source-detector layout directions in different scanning segments are configured to have different angles, thereby expanding the range of projection angles.

FIG. 4 schematically shows a schematic diagram of beam emission directions of the ray sources 1 in the scanning imaging system provided by an embodiment of the present disclosure.

In embodiments of the present disclosure, in each scanning segment, the beam emission directions of the plurality of ray sources 1 may be the same and/or may be different.

As shown in FIG. 4, the fan-angle direction primary beam planes (indicated by three dotted lines) emitted by three ray sources 1 are oriented in different directions. In this case, the plurality of ray sources 1 have different beam emission directions. Scanning is performed by rapidly switching the beam emission, which increases a range of projection angles and improves data completeness without affecting the scanning speed.

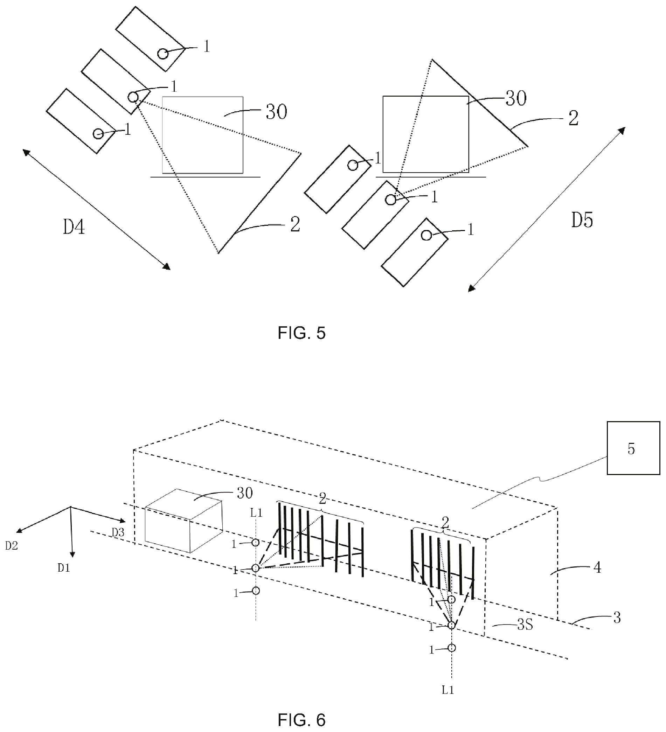

FIG. 5 schematically shows a side view of the scanning imaging system with different source-detector layout directions when viewed in the conveying direction provided by an embodiment of the present disclosure.

In an embodiment of the present disclosure, the first layout direction D4 forms a first inclination angle with respect to the conveying surface 3S, the first inclination angle is greater than 0° and less than 90°; and/or the second layout direction D5 forms a second inclination angle with respect to the conveying surface 3S, the second inclination angle is greater than 0° and less than 90°.

For example, according to different source-detector layout directions, another scanning imaging system is provided in an embodiment of the present disclosure. FIG. 6 schematically shows a schematic structural diagram of another scanning imaging system provided by an embodiment of the present disclosure.

In the first scanning segment, the m1 ray sources 1 and the n1 detectors 2 are arranged on both sides of the scanning channel 4 in the first layout direction D4, the first layout direction D4 is parallel to the conveying surface 3S. The m1 ray sources 1 are used to alternately emit ray beams to form a scanning region. The m1 ray sources 1 are located on a side of the scanning channel 4 and sequentially arranged at intervals along the first straight line L1. The plurality of ray sources 1 alternately emit ray beams to form the scanning region.

Continuing to refer to FIG. 6, in the second scanning segment, the m2 ray sources 1 and the n2 detectors 2 are arranged on both sides of the scanning channel 4 in the second layout direction D5, the second layout direction D5 is parallel to the conveying surface 3S. The m2 ray sources 1 are used to alternately emit ray beams to form a scanning region. The m2 ray sources 1 are located on a side of the scanning channel 4 and sequentially arranged at intervals along the second straight line L2. The plurality of ray sources 1 alternately emit ray beams to form the scanning region.

It should be noted that the orthographic projection of the first layout direction D4 on the plane perpendicular to the conveying direction D3 coincides with the orthographic projection of the second layout direction D5 on the plane perpendicular to the conveying direction D3.

Continuing to refer to FIG. 6, it should be noted that in an embodiment of the present disclosure, the n1 detectors 21 are arranged at equal angular intervals in the conveying direction D3, and the n2 detectors 2 are alsoarranged at equal angular intervals in the conveying direction D3.

In an embodiment of the present disclosure, a detection surface of the n1 detectors 21 forms a first surface angle with respect to the conveying surface 3S, and a detection surface of the n2 detectors 2 forms a second surface angle with respect to the conveying surface 3S. The first surface angle is equal to the second surface angle.

According to embodiments of the present disclosure, the layout directions of the plurality of ray sources 1 and plurality of detectors 2 may be different in different scanning segments. Scanning is performed by rapidly switching the beam emission, thereby achieving arbitrary projection angles. As the number of scanning segments increases, the number of source-detector sets increases linearly, leading to improved completeness of projection data and higher quality of the reconstructed images.

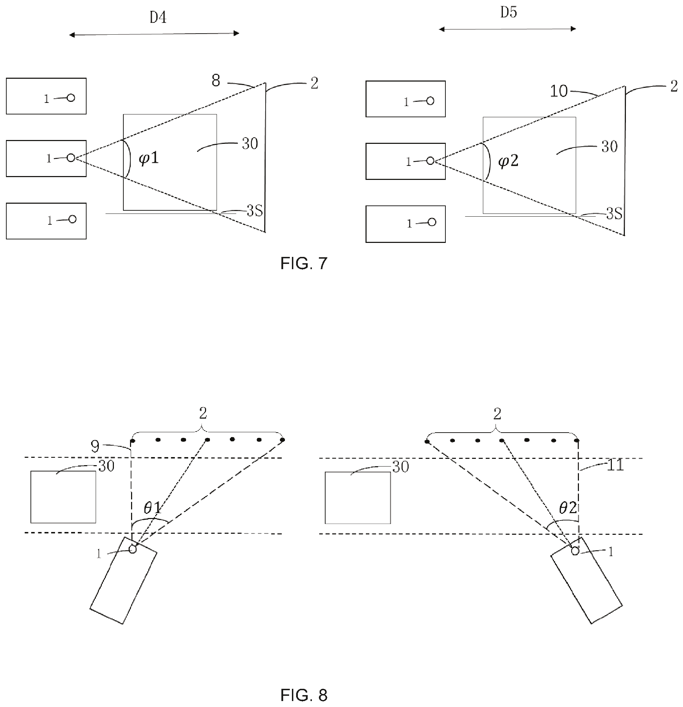

FIG. 7 schematically shows a side view of another scanning imaging system when viewed in the conveying direction provided by an embodiment of the present disclosure. FIG. 8 schematically shows a top view of another scanning imaging system provided by an embodiment of the present disclosure.

Referring to FIG. 7 and FIG. 8, in the first scanning segment, at least one of the m1 ray sources 1 emits a ray beam that includes a first fan-angle direction primary beam plane 8 (indicated by a dotted line) and a first cone-angle direction primary beam plane 9 (indicated by a dashed line); in the second scanning segment, at least one of the m2 ray sources 1 emits a ray beam that includes a second fan-angle direction primary beam plane 10 (indicated by a dotted line) and a second cone-angle direction primary beam plane 11 (indicated by a dashed line).

Continuing to refer to FIG. 7, by way of example, the first fan-angle direction primary beam plane 8 is not parallel to the second fan-angle direction primary beam plane.

Continuing to refer to FIG. 8, by way of example, the first cone-angle direction primary beam plane 9 is parallel to the second cone-angle direction primary beam plane 11.

Continuing to refer to FIG. 8, the first cone-angle direction primary beam plane 9 is parallel to the conveying surface 3S, and the second cone-angle direction primary beam plane 11 is parallel to the conveying surface 3S.

A first relative position of the m1 ray sources 1 with respect to the n1 detectors 2 in the conveying direction D3 is different from a second relative position of the m2 ray sources 1 with respect to the n2 detectors 2 in the conveying direction D3.

Continuing to refer to FIG. 8, the n1 detectors 2 include a first column of detector modules arranged foremost in the conveying direction D3, and the n2 detectors 2 include a first column of detector modules arranged foremost in the conveying direction D3. When viewed in a direction perpendicular to the conveying surface 3S, the m1 ray sources 1 are offset from the first column of detector modules of the n1 detectors 2 by a first offset distance in the conveying direction D3, and the m2 ray sources 1 are offset from the first column of detector modules of the n2 detectors 2 by a second offset distance in the conveying direction D3. The first offset distance is not equal to the second offset distance.

An operating process of the scanning imaging system according to embodiments of the present disclosure will be described in detail below. By way of example, the operating process of the scanning imaging system may include the following steps.

First, the scanned object 30 is fixed onto the conveying device 3, so that the scanned object 30 moves in the scanning channel 4 in the conveying direction D3 of the conveying device 3.

Next, as the scanned object 30 passes through a plurality of scanning segments, a plurality of ray sources 1 in each scanning segment alternately emit ray beams to form a scanning region.

Then, a plurality of detectors 2 in each scanning segment detect the projection data formed by the ray beams emitted from the plurality of ray sources 1 and transmitted through the scanned object 30 in the process of the scanned object passing through the scanning segment.

Then, the imaging device 5 generates a three-dimensional reconstructed image of the scanned object 30 according to the projection data formed by the detectors 2 in the plurality of scanning segments.

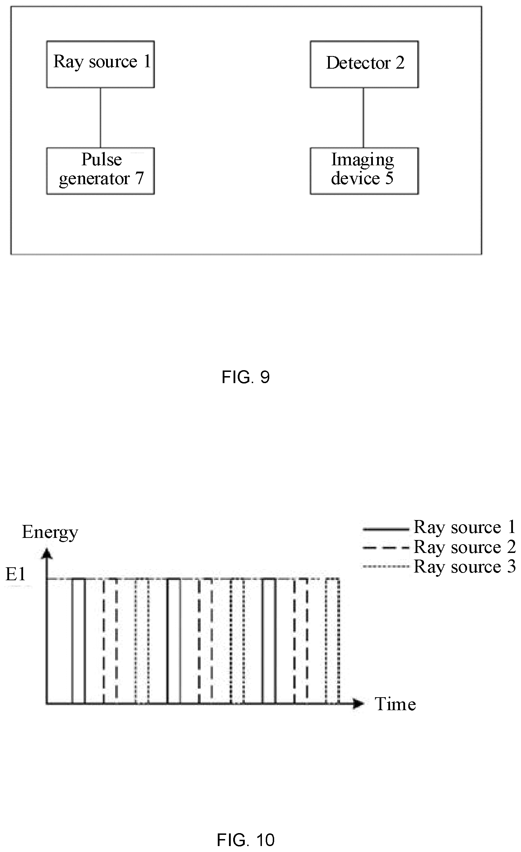

According to an embodiment of the present disclosure, referring to FIG. 9, the scanning imaging system may further include a pulse generator 7, which is used to generate a trigger pulse sequence for controlling the plurality of ray sources 1 to alternately emit ray beams. The trigger pulse sequence may be specifically implemented as the following cases.

In a first case, a cycle of the trigger pulse sequence includes trigger pulse signals corresponding one-to-one with the plurality of ray sources 1, and the trigger pulse signals are used to control the corresponding ray sources 1 to emit ray beams with the same energy.

By way of example, FIG. 10 shows the trigger pulse signals corresponding one-to-one with three ray sources 1. The horizontal axis represents time, and the trigger pulse signals corresponding one-to-one with the three ray sources 1 are alternately arranged along the time axis. The vertical axis represents energy, and the trigger pulse signals indicate the same energy E1. The projection image data obtained in this case is complete data that may be used for monoenergetic CT reconstruction.

In a second case, a cycle of the trigger pulse sequence includes sets of trigger pulse signals corresponding one-to-one with the plurality of ray sources 1. Each set of trigger pulse signals includes a first trigger pulse signal and a second trigger pulse signal, which are used to control the corresponding ray source 1 to sequentially emit a first ray sub-beam with a first energy and a second ray sub-beam with a second energy. The ray source 1 may be a dual-energy accelerator with adjustable energy.

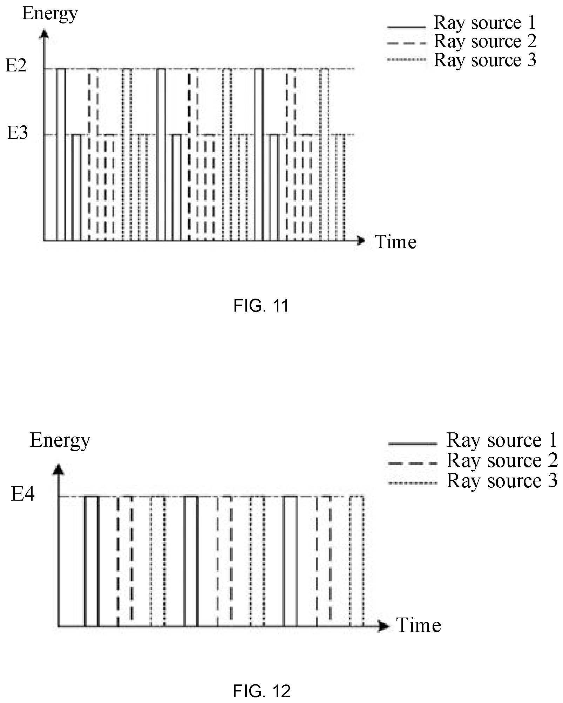

By way of example, FIG. 11 shows sets of trigger pulse signals corresponding one-to-one with three ray sources 1, where each ray source 1 emits beams twice. The horizontal axis represents time, and the sets of trigger pulse signals corresponding one-to-one with the three ray sources 1 are alternately arranged along the time axis. The vertical axis represents energy, the first trigger pulse signal in each set of trigger pulse signals indicates energy E2, and the second trigger pulse signal in each set of trigger pulse signals indicate energy E3. The projection image data obtained in this case is complete data that may be used for dual-energy CT reconstruction.

A detailed description of the principle of dual-energy CT reconstruction will be provided below.

First, the scanned object 30 is scanned using dual-energy rays to obtain dual-energy projection data.

Then, according to a pre-created lookup table or by solving a system of equations, basis material coefficient projection values corresponding to the dual-energy projection data are calculated. The method for creating a lookup table involves selecting two basis materials, calculating projection values of dual-energy ray passing through these two materials at different thicknesses, and obtaining the lookup table according to a relationship between high-and low-energy projection values and different thickness combinations. The method for analytically solving the system of equations is to compute the corresponding thickness combination by solving high-and low-energy projection system of equations under basis material decomposition using the actually obtained high-and low-energy projection values.

Then, from the projection values of the basis materials, a distribution image of basis material coefficients may be obtained. From the distribution of basis material coefficients, it is possible to obtain the atomic number, the characteristic density image, and the attenuation coefficient image of the scanned object 30 at any energy, enabling material classification and automatic identification of the scanned object 30.

It should be noted that in order to perform dual-energy CT reconstruction using the projection image data obtained in the second case, the scanning imaging system further includes a decomposition unit. The decomposition unit may decompose each of the first projection data and the second projection data into first projection sub-data corresponding to the first ray sub-beam and second projection sub-data corresponding to the second ray sub-beam. The imaging device 5 may generate a reconstructed image of the scanned object 30 according to the first projection sub-data and the second projection sub-data of the first projection data as well as the first projection sub-data and the second projection sub-data of the second projection data.

In a third case, the ray source 1 may be a monoenergetic accelerator with adjustable energy. A cycle of the trigger pulse sequence includes trigger pulse signals corresponding one-to-one with the plurality of ray sources 1. During a first scan of the scanned object 30, the trigger pulse signals are used to control the corresponding ray sources 1 to emit ray beams with the same first energy; during a second scan of the scanned object 30, the trigger pulse signals are used to control the corresponding ray sources 1 to emit ray beams with the same second energy.

By way of example, during the first scan, all trigger pulse signals indicate energy E1 (referring to FIG. 10); during the second scan, all trigger pulse signals indicate energy E4 (referring to FIG. 12). The projection image data acquired in this way may also be used for dual-energy CT reconstruction, and the obtained image information of the scanned object 30 includes high-energy attenuation coefficient, low-energy attenuation coefficient, atomic number, electron density and other information, thereby enabling material classification and automatic identification of the scanned object 30.

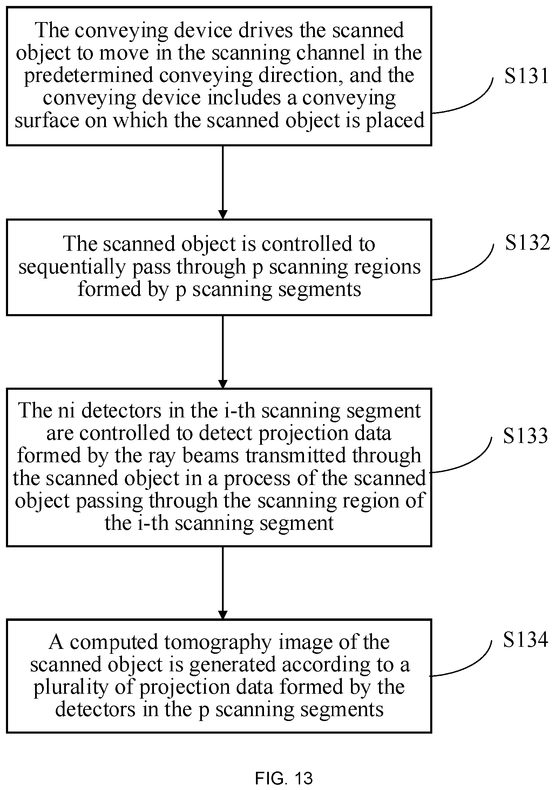

FIG. 13 shows a schematic flowchart of a scanning imaging method provided by an embodiment of the present disclosure, which is applicable to the scanning imaging system as described above. The scanning imaging method in FIG. 13 includes step S131 to step S134.

In step S131, the conveying device 3 drives the scanned object 30 to move in the scanning channel 4 in the predetermined conveying direction D3. The conveying device 3 includes a conveying surface 3S for placing the scanned object 30.

In step S132, the scanned object 30 is controlled to sequentially pass through p scanning regions formed by p scanning segments. The mi ray sources 1 in the i^{th} scanning segment among the p scanning segments are controlled to alternately emit ray beams to form a scanning region before the scanned object 30 enters a scanning range of the i^{th} scanning segment such that the scanned object 30 passes through the scanning region of the i^{th} scanning segment, where i and j are positive integers greater than or equal to 1 and less than or equal to p, mi is a positive integer greater than or equal to 2, and ni is a positive integer greater than or equal to 1.

In step S133, the ni detectors 2 in the i^{th} scanning segment are controlled to detect projection data formed by the ray beams transmitted through the scanned object 30 in a process of the scanned object 30 passing through the scanning region of the i^{th} scanning segment.

In step S134, a computed tomography image of the scanned object 30 is generated according to a plurality of projection data formed by the detectors 2 in the p scanning segments.

In an embodiment of the present disclosure, in a scanning imaging system based on multiple scanning segments each including distributed ray sources and detectors, the image reconstruction algorithm may be a reconstruction algorithm based on differential back-projection filtering, which allows image reconstruction while scanning, thereby improving the efficiency of image reconstruction and reducing waiting time.

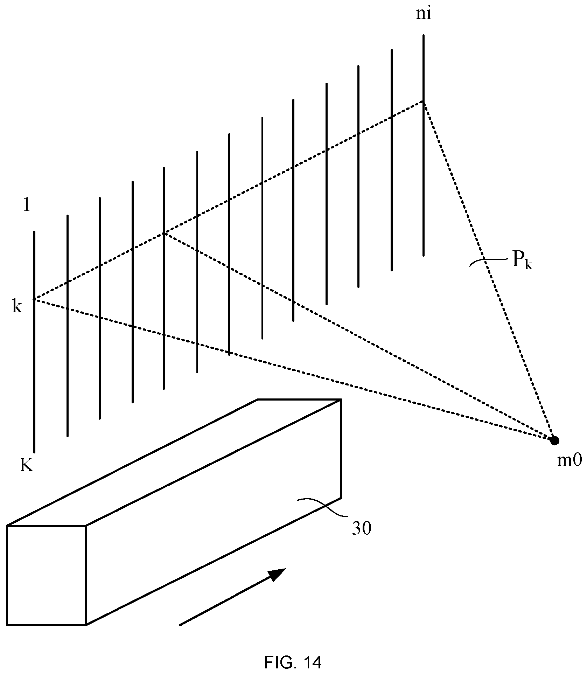

Specifically, referring to FIG. 14, in an embodiment of the present disclosure, the image reconstruction algorithm may be implemented according to the following operations.

In operation S141, for each single ray source, such as a ray source among the mi ray sources in the i^{th} scanning segment, that single ray source is designated as m0 for ease of description. The single ray source m0, together with the ni detectors positioned opposite to the single ray source m0, forms a source-detector combination. The source-detector combination includes the single ray source m0 and a detector array formed by the ni detectors. Each of the ni detectors may include K detector units. For example, in the example shown in FIG. 14, the K detector units are arranged vertically.

In operation S142, the ray source m0 and k^{th} detector units of the 1^{st} to ni^{th} detectors form a plane Pk. The plane Pk may be horizontal, vertical, or inclined at a particular angle. In the process of the scanned object 30 passing through the scanning region, differential back-projection images may be obtained using data from all ni detectors on the plane Pk, and a reconstructed image of the plane Pk may be obtained through a reconstruction algorithm.

In operation S143, for the ray source m0, the same process is performed for the 1^{st} to K^{th} planes to obtain the reconstructed images of the 1^{st} to K^{th} planes, thereby obtaining a reconstruction result by scanning with the ray source m0.

In operation S144, the reconstruction process for the ray source m0 is repeatedly performed for each ray source, thereby obtaining a set of reconstructed images based on data from different ray sources.

In operation S145, the weighted fusion of the reconstructed images obtained from the data of the plurality of ray sources is normalized to obtain a final reconstructed image.

In the above operation S143, the image reconstruction is performed for each plane, and the computation is performed for each plane separately, thus allowing parallel computation. In the above operation S144, a complete three-dimensional CT image is reconstructed separately for each ray source, and the computation is performed for each ray source separately, thus allowing parallel computation. Therefore, in embodiments of the present disclosure, the above operations may fully utilize a GPU cluster to perform distributed parallel computation, thereby increasing a speed of the image reconstruction.

In some exemplary embodiments, the scanning imaging system further includes a pulse trigger. Before the step of controlling the plurality of ray sources 1 to alternately emit ray beams to form a scanning region, the scanning imaging method further includes: generating, by the pulse trigger, a trigger pulse sequence for controlling the plurality of ray sources 1 to alternately emit ray beams.

A cycle of the trigger pulse sequence may include trigger pulse signals corresponding one-to-one with the plurality of ray sources 1. The trigger pulse signals are used to control the corresponding ray sources 1 to emit ray beams with the same energy.

Alternatively, a cycle of the trigger pulse sequence may include sets of trigger pulse signals corresponding one-to-one with the plurality of ray sources 1. Each set of trigger pulse signals includes a first trigger pulse signal and a second trigger pulse signal, which are used to control the corresponding ray source 1 to sequentially emit a first ray sub-beam with a first energy and a second ray sub-beam with a second energy. The imaging device 5 may generate a reconstructed image of the scanned object 30 according to the first projection sub-data and the second projection sub-data decomposed from the projection data.

According to the scanning imaging system and the imaging method in embodiments of the present disclosure, in the security inspection of an item, the item may be moved by a conveying device in a predetermined conveying direction. As the item passes through a plurality of scanning segments, a plurality of ray sources in each scanning segment alternately emit ray beams to form a scanning region. Then, a plurality of detectors in each scanning segment detect the projection data formed by the ray beams emitted from the plurality of ray sources and transmitted through the item in the process of the item passing through the scanning segment. Then, the imaging device generates a computed tomography image of the scanned object according to a plurality of projection data formed by the detectors in the plurality of scanning segments. The scanning system has a simple structure with a single linear track, and there is no need to provide a rotary gantry. The object does not rotate during scanning, and the sources and detectors remain stationary. With a single pass through the channel and rapid switching the beam emission of multiple source-detector sets, the scanning is completed and a complete high-quality three-dimensional reconstructed image of the inspected object is obtained.

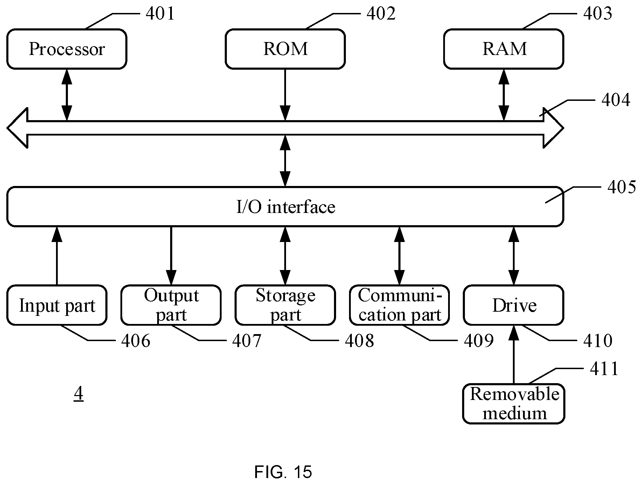

FIG. 15 schematically shows a block diagram of an imaging device of a scanning imaging system according to an embodiment of the present disclosure.

As shown in FIG. 15, an imaging device 5 of a scanning imaging system according to an embodiment of the present disclosure may include a processor 401, which may execute various appropriate actions and processing according to the program stored in a read only memory (ROM) 402 or the program loaded into a random access memory (RAM) 403 from a storage part 408. The processor 401 may include, for example, a general-purpose microprocessor (for example, CPU), an instruction set processor and/or a related chipset and/or a special-purpose microprocessor (for example, an application specific integrated circuit (ASIC)), and the like. The processor 401 may further include an on-board memory for caching purposes. The processor 401 may include a single processing unit or multiple processing units for executing different actions of the method flow according to embodiments of the present disclosure.

Various programs and data required for the operation of the electronic device 400 are stored in the RAM 403. The processor 401, the ROM 402 and the RAM 403 are connected to each other through a bus 404. The processor 401 executes various operations of the method flow according to embodiments of the present disclosure by executing the programs in the ROM 402 and/or the RAM 403. It should be noted that the program may also be stored in one or more memories other than the ROM 402 and the RAM 403. The processor 401 may also execute various operations of the method flow according to embodiments of the present disclosure by executing the programs stored in the one or more memories.

According to embodiments of the present disclosure, the electronic device 400 may further include an input/output (I/O) interface 405, which is also connected to the bus 404. The electronic device 400 may further include one or more of the following components connected to the I/O interface 405: an input part 406 including a keyboard, a mouse, etc.; an output part 407 including a cathode ray tube (CRT), a liquid crystal display (LCD), etc. and a speaker, etc.; a storage part 408 including a hard disk, etc.; and a communication part 409 including a network interface card such as a LAN card, a modem, and the like. The communication part 409 performs communication processing via a network such as the Internet. A drive 410 is also connected to the I/O interface 405 as required. A removable medium 411, such as a magnetic disk, an optical disk, a magneto-optical disk, a semiconductor memory, and the like, is installed on the drive 410 as required, so that the computer program read therefrom is installed into the storage part 408 as needed.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

In embodiments of the present disclosure, a scanning imaging system and a corresponding scanning imaging method are provided. In the scanning imaging system, a system design for DR based on linear CT is implemented without affecting the original scanning method of linear CT, and the linear CT scanning steps are not increased. By simply replacing one or several columns of detectors 2, it is possible to obtain clearer and more complete DR images without degrading the quality of the three-dimensional reconstructed images. When the ray source 1 operates in a dual-energy emission mode, the color accuracy of the DR image is improved. When the ray source 1 operates in a dual-energy emission mode and the second detector 2 is an energy-resolving detector, it is possible to achieve spectral DR imaging with more comprehensive spectral measurements, resulting in more accurate image colors and enabling a wider range of material classification.

Embodiments of the present disclosure have been described above. However, these embodiments are merely for illustrative purposes and are not intended to limit the scope of the present disclosure. Although embodiments have been described separately above, this does not mean that measures in embodiments may not be used in combination advantageously. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. A CT scanning imaging system based on a single linear scanning channel, comprising:
a conveying device configured to move a scanned object in the single linear scanning channel in a predetermined conveying direction, wherein the conveying device comprises a conveying surface for placing the scanned object;
p scanning segments arranged at intervals in the conveying direction, wherein p is a positive integer greater than or equal to 2, and wherein each of the p scanning segments comprises a plurality of ray sources and at least one detector, in each scanning segment, the plurality of ray sources are sequentially arranged at intervals on one side of the scanning channel and configured to alternately emit ray beams to form a scanning region, and the at least one detector is located on the other side of the scanning channel and configured to detect projection data formed by the ray beams transmitted through the scanned object in a process of the scanned object passing through the scanning region; and
an imaging device configured to generate a three-dimensional reconstructed image of the scanned object according to the projection data detected by each detector in the p scanning segments.

2. The system according to claim 1, wherein the p scanning segments comprise an i^{th} scanning segment and a j^{th} scanning segment, i and j are positive integers greater than or equal to 1 and less than or equal to p, and i is not equal to j;
wherein the i^{th} scanning segment comprises mi ray sources and ni detectors, mi is a positive integer greater than or equal to 2, and ni is a positive integer greater than or equal to 1;
wherein the j^{th} scanning segment comprises mj ray sources and nj detectors, mj is a positive integer greater than or equal to 2, and nj is a positive integer greater than or equal to 1; and
wherein when viewed along the scanning channel, the mi ray sources and the ni detectors are arranged on both sides of the scanning channel in a first layout direction, and the mj ray sources and the nj detectors are arranged on both sides of the scanning channel in a second layout direction.

3. The system according to claim 2, wherein the first layout direction is different from the second layout direction.

4. The system according to claim 2 or 3, wherein an orthographic projection of the first layout direction on a plane perpendicular to the conveying direction intersects with an orthographic projection of the second layout direction on the plane perpendicular to the conveying direction.

5. The system according to claim 4, wherein the orthographic projection of the first layout direction on the plane perpendicular to the conveying direction is perpendicular to the orthographic projection of the second layout direction on the plane perpendicular to the conveying direction.

6. The system according to claim 4, wherein the first layout direction is parallel to a width direction of the scanning channel and parallel to the conveying surface.

7. The system according to claim 4 or 6, wherein the second layout direction is parallel to a height direction of the scanned object and perpendicular to the conveying surface.

8. The system according to claim 3, wherein the first layout direction forms a first inclination angle with respect to the conveying surface, and the first inclination angle is greater than 0° and less than 90°; and/or
wherein the second layout direction forms a second inclination angle with respect to the conveying surface, and the second inclination angle is greater than 0° and less than 90°.

9. The system according to claim 2, wherein an orthographic projection of the first layout direction on a plane perpendicular to the conveying direction coincides with an orthographic projection of the second layout direction on the plane perpendicular to the conveying direction.

10. The system according to claim 2, 3 or 9, wherein a first relative position of the mi ray sources with respect to the ni detectors in the conveying direction is different from a second relative position of the mj ray sources with respect to the nj detectors in the conveying direction.

11. The system according to claim 10, wherein the ni detectors comprise a first column of detector modules arranged foremost in the conveying direction, and the nj detectors comprise a first column of detector modules arranged foremost in the conveying direction; and
wherein when viewed in a direction perpendicular to the conveying surface, the mi ray sources are offset from the first column of detector modules of the ni detectors by a first offset distance in the conveying direction, the mj ray sources are offset from the first column of detector modules of the nj detectors by a second offset distance in the conveying direction, and the first offset distance is not equal to the second offset distance.

12. The system according to any one of claims 2 to 11, wherein ni=1, and the ni detector is an area array detector; and/or nj=1, and the nj detector is an area array detector.

13. The system according to any one of claims 2 to 11, wherein ni is greater than or equal to 2, and the ni detectors are linear detector arrays; and/or nj is greater than or equal to 2, and the nj detectors are linear detector arrays.

14. The system according to claim 13, wherein the ni detectors are arranged at intervals in the conveying direction, and/or the nj detectors are arranged at intervals in the conveying direction.

15. The system according to claim 14, wherein the ni detectors are arranged at equal intervals in the conveying direction, or the ni detectors are arranged at equal angular intervals in the conveying direction; and/or
wherein the nj detectors are arranged at equal intervals in the conveying direction, or the nj detectors are arranged at equal angular intervals in the conveying direction.

16. The system according to any one of claims 12 to 15, wherein a detection surface of the ni detectors forms a first surface angle with respect to the conveying surface, a detection surface of the nj detectors forms a second surface angle with respect to the conveying surface, and the first surface angle is not equal to the second surface angle.

17. The system according to claim 16, wherein the first surface angle is about 90°, and the second surface angle is about 0°.

18. The system according to any one of claims 12 to 15, wherein a detection surface of the ni detectors forms a first surface angle with respect to the conveying surface, a detection surface of the nj detectors forms a second surface angle with respect to the conveying surface, and the first surface angle is equal to the second surface angle.

19. The system according to any one of claims 2 to 18, wherein the mi ray sources are sequentially arranged at intervals along a first straight line, and the first straight line is an imaginary straight line extending in a first direction perpendicular to the conveying surface; and/or
wherein the mj ray sources are sequentially arranged at intervals along a second straight line, and the second straight line is an imaginary straight line extending in a second direction perpendicular to the first direction and the conveying direction.

20. The system according to any one of claims 2 to 19, wherein the mi ray sources have the same beam emission direction, and/or the mj ray sources have the same beam emission direction; or
wherein at least two of the mi ray sources have different beam emission directions, and/or at least two of the mj ray sources have different beam emission directions.

21. The system according to any one of claims 2 to 20, wherein at least one of the mi ray sources is configured to emit a cone beam comprising a first fan-angle direction primary beam plane and a first cone-angle direction primary beam plane; and
wherein at least one of the mj ray sources is configured to emit a cone beam comprising a second fan-angle direction primary beam plane and a second cone-angle direction primary beam plane.

22. The system according to claim 21, wherein the first fan-angle direction primary beam plane is parallel to the second fan-angle direction primary beam plane; and/or
wherein the first cone-angle direction primary beam plane is not parallel to the second cone-angle direction primary beam plane.

23. The system according to claim 21, wherein the first fan-angle direction primary beam plane is not parallel to the second fan-angle direction primary beam plane; and/or
wherein the first cone-angle direction primary beam plane is parallel to the second cone-angle direction primary beam plane.

24. The system according to any one of claims 21 to 23, wherein the first fan-angle direction primary beam plane is perpendicular to the conveying surface and perpendicular to the conveying direction; or the first fan-angle direction primary beam plane is perpendicular to the conveying surface and forms a first angle greater than 90° and less than 180° with respect to the conveying direction; or the first fan-angle direction primary beam plane forms a first included angle not equal to 90° with respect to the conveying surface and is perpendicular to the conveying direction; or the first fan-angle direction primary beam plane forms a first included angle not equal to 90° with respect to the conveying surface and forms a first angle greater than 90° and less than 180° with respect to the conveying direction; and/or
wherein the second fan-angle direction primary beam plane is perpendicular to the conveying surface and perpendicular to the conveying direction; or the second fan-angle direction primary beam plane is perpendicular to the conveying surface and forms a second angle greater than 0° and less than 90° with respect to the conveying direction; or the second fan-angle direction primary beam plane forms a second included angle not equal to 90° with respect to the conveying surface and is perpendicular to the conveying direction; or the second fan-angle direction primary beam plane forms a second included angle not equal to 90° with respect to the conveying surface and forms a second angle greater than 0° and less than 90° with respect to the conveying direction.

25. The system according to any one of claims 21 to 24, wherein the first cone-angle direction primary beam plane is parallel to the conveying surface, or the first cone-angle direction primary beam plane is perpendicular to the conveying surface, or the first cone-angle direction primary beam plane forms a third included angle greater than 0° and less than 90° with respect to the conveying surface; and/or
wherein the second cone-angle direction primary beam plane is parallel to the conveying surface, or the second cone-angle direction primary beam plane is perpendicular to the conveying surface, or the second cone-angle direction primary beam plane forms a fourth included angle greater than 0° and less than 90° with respect to the conveying surface.

26. The system according to any one of claims 21 to 25, wherein the first fan-angle direction primary beam plane comprises a first cone angle, and the first cone angle corresponds to a size of at least one of the ni detectors in a first arrangement direction perpendicular to the first layout direction; and/or
wherein the second fan-angle direction primary beam plane comprises a second cone angle, and the second cone angle corresponds to a size of at least one of the nj detectors in a first arrangement direction perpendicular to the second layout direction; and/or
wherein the first cone-angle direction primary beam plane comprises a first fan angle, and the first fan angle corresponds to a size of the ni detectors in a second arrangement direction parallel to the conveying direction; and/or
wherein the second cone-angle direction primary beam plane comprises a second fan angle, and the second fan angle corresponds to a size of the nj detectors in a second arrangement direction parallel to the conveying direction.

27. The system according to any one of claims 1 to 26, wherein the scanned object comprises at least one of a container, a car, or a truck, and each of the plurality of ray sources comprises a MeV-level accelerator; or
wherein the scanned object comprises at least one of a suitcase or a parcel, and each of the plurality of ray sources comprises a KeV-level X-ray machine.

28. A CT scanning imaging method applied to the system according to any one of claims 1 to 27, comprising:
driving a scanned object to move in a scanning channel in a predetermined conveying direction using a conveying device, wherein the conveying device comprises a conveying surface for placing the scanned object;
controlling the scanned object to sequentially pass through p scanning regions formed by p scanning segments, wherein mi ray sources in an i^{th} scanning segment among the p scanning segments are controlled to alternately emit ray beams to form a scanning region before the scanned object enters a scanning range of the i^{th} scanning segment such that the scanned object passes through the scanning region of the i^{th} scanning segment, and ni detectors in the i^{th} scanning segment are controlled to detect projection data formed by the ray beams transmitted through the scanned object in a process of the scanned object passing through the scanning region of the i^{th} scanning segment, where i and j are positive integers greater than or equal to 1 and less than or equal to p, mi is a positive integer greater than or equal to 2, and ni is a positive integer greater than or equal to 1; and
generating a computed tomography image of the scanned object according to a plurality of projection data formed by the detectors in the p scanning segments.
